# EUROPEAN PATENT SPECIFICATION

(11) **EP 1 851 024 B1**
(45) Date of publication and mention of the grant of the patent: **21.05.2008**
(21) Application number: 06704238.2
(22) Date of filing: 17.01.2006
(51) Int. Cl.: B29B 17/00

(54) **PLANT AND METHOD FOR PROCESSING HETEROGENEOUS PLASTIC MATERIALS ARRIVING FROM WASTE RECYCLING**
ANLAGE UND VERFAHREN ZUR VERARBEITUNG VON HETEROGENEN, AUS DEM ABFALLRECYCLING STAMMENDEN KUNSTSTOFFMATERIALIEN
INSTALLATION ET PROCEDE DE TRAITEMENT DE MATERIAUX PLASTIQUES HETEROGENES OBTENUS DU RECYCLAGE DE DECHETS

(30) Priority: 19.01.2005 IT UD20050004
(43) Date of publication of application: 07.11.2007
(73) Proprietor: Strizzolo, Andrea, 33100 Udine (IT); Strizzolo, Matteo, 33100 Udine (IT)
(72) Inventor: Strizzolo, Andrea, 33100 Udine (IT); Strizzolo, Matteo, 33100 Udine (IT)
(74) Representative: Petraz, Gilberto Luigi
(86) International application number: PCT/EP2006/050240
(87) International publication number: WO 2006/077207

(56) References cited:
- EP-A- 0 311 520
- US-A- 5 232 960
- US-A1- 2003 155 063

## Description

### FIELD OF THE INVENTION

The present invention concerns a plant, and the relative method, to process heterogeneous plastic materials arriving from waste recycling processes, both urban and industrial. To be more exact, the present invention provides, starting from a mass of heterogeneous plastic materials, possibly pre-processed, to obtain in an extrusion unit a melted mixture suitable for injection into molds in order to make plastic articles having desired and pre-determinate characteristics.

### BACKGROUND OF THE INVENTION

Plants and methods are known, for processing and recycling plastic materials arriving from the differentiated and/or non-differentiated collection of urban and industrial waste, which normally provide to purify and separate groups of homogeneous polymers, to extrude the latter and possibly inject the extruded product into molds in order to make plastic articles.

US 2003/0155063 discloses an apparatus and a method having the features of the preamble of the main claims.

The molds can be of the injection type, rotational, heat blow with one or more layers, structural foam, thermoforming, profile extrusion, or others.

Such known plants, however, need to work homogeneous polymers separately, and therefore usually provide, upstream thereof, costly and complex treatments of selection, washing, centrifugal spinning, drying and transformation, in order to obtain, from the heterogeneous mass of waste arriving from collection, the division into groups of individual or homogeneous materials, in which the presence of impurities is limited to very small percentages.

For this purpose, complex devices are known for the selection of waste arriving from differentiated collection wherein, with manual, semi-automatic or automatic systems, the various types of plastic materials are separated, such as for example PET (PolyEthyleneTerephthalate), possibly divided also according to color, HDPE (High Density PolyEthylene) and/or other polymers.

In known plants the quality of the final product derives directly from the quality of the plastic extruded; therefore, in order to obtain high-quality products, the extruded plastic must have known and controllable characteristics of sliding and fluidity, it must be homogeneous, without gaseous inclusions (unless foreseen) and inert materials, and must also generally be worked at high injection and molding pressure. These conditions entail an increase in the complexity and costs of the plant, and make it impossible for the plant to work material which has not be subjected in advance to careful processes of washing, selection and preparation.

Moreover, the presence in the raw material fed from the extruder of heterogeneous polymers and inert products, together with the high level of gaseous emissions that are naturally found, entail malfunctions in the plant and in the molds with which the article is made.

Heterogeneous plastics, for which it is not advantageous or possible to effect an effective separation, very often finish up in the waste dumps. The only alternative to the waste dump practical today, for a minimum part of the large quantities of heterogeneous plastic waste collected, is to use them for energy in dedicated plants.

Plants are also known for processing non-selected heterogeneous plastics, which do not, however, give much attention to the degassing of the material during the process, and use very low working pressures and very wide sections of the passage through the extruder. The final products, consequently, whether they are extruded profiles or molded articles, are characterized in that they have a large section, are heavy and have little mechanical consistency.

Moreover, the high sections of the articles entail very long cooling times, considerably reducing the productivity of the plant.

The article thus obtained is therefore very expensive and has no particular industrial applications since it is of little technical value compared with the same objects made with pure plastic materials, coming from recycled single material or of other materials.

One purpose of the present invention is to achieve a plant that allows to use heterogeneous plastics to produce articles that are resistant and stable in quality, analogous to those produced with pure raw materials.

Another purpose of the present invention is to achieve a processing plant for heterogeneous plastic materials that allows the inert fractions or of polymers that are not compatible with the polyolefin base, to obtain in the extruder an injectable melted plastic, having characteristics of consistent amalgamation and able, thanks to its inert loads, to be compacted into suitable molds and give resistant quality to the products obtained.

The Applicants have devised, tested and embodied the present invention to overcome the shortcomings of the state of the art and to obtain these and other purposes and advantages.

### SUMMARY OF THE INVENTION

The present invention is set forth and characterized essentially in the main claims, while the dependent claims describe other innovative characteristics of the invention.

In accordance with the above purposes, a plant according to the present invention is applied for processing heterogeneous plastic materials arriving from the differentiated and/or non-differentiated collection of waste, in order to obtain a plastic article.

The plant, according to a characteristic of the present invention, comprises at least a pre-processing unit able to receive said waste at inlet, and to subject it to at least a process of grinding and screening in order to provide at outlet a mass of heterogeneous plastic materials of a size of not more than about 30 mm and inside it a percentage in weight of non-plastic materials not more than 10%. Moreover, downstream of the pre-processing unit the plant comprises a mixing and plasticization unit able to extrude the mass of heterogeneous plastic materials emerging from the pre-processing unit, in order to obtain a substantially melted heterogeneous plastic mixture. According to another characteristic of the present invention, the mixing and plasticization unit is also suitable to perform a strong action of degassing on the plastic mixture in the course of the extrusion steps.

In a first form of embodiment, the pre-processing unit and the mixing and plasticization unit are disposed in line with each other and are substantially integrated into the plant.

According to a variant, the pre-processing unit and the mixing and plasticization unit are remote from each other, so that the material arrives at the extrusion step already suitably treated.

In a preferential form of embodiment of the present invention, the pre-processing unit comprises at least shredding means and selection means suitable to separate the heterogeneous plastic material from the rest of the waste, and gelling means suitable to effect a pre-plasticization and first degassing of the heterogeneous plastic material. Moreover, the pre-processing unit comprises a plurality of containers which allow a differentiated storage of the plastic material according to the structural characteristics of the plastic article to be made.

The mixing and plasticization unit comprises at least an extrusion unit and degassing means suitable to extract from the melted plastic mixture the gases produced during extrusion and due to the melting of organic materials, degraded plastics or other, present therein, which could interfere with the correct homogenization of the material and hence with the subsequent achievement of the article.

In a preferential embodiment, the degassing means are disposed at least upstream of the outlet of the extrusion unit.

According to a variant, the plant also comprises introduction means able to inject in a controlled manner into the plastic mixture one or more inert gases, for example nitrogen, carbon dioxide, etc., and/or one or more additives such as for example glass fiber, rock wool, talc, calcium carbonate, mica, bakelite and/or other material such as metal oxide, solid expander, anti-oxidant, fluidizer and others, according to the technical and/or structural characteristics of the article to be made.

Downstream of the mixing and plasticization unit, the plant comprises, in a preferential embodiment, an injection unit provided with injection means that injects into a mold the melted plastic emerging from the extruder, in order to make the article.

According to a variant, downstream of the mixing and plasticization unit the plant comprises a die-plate unit for making profiles.

Advantageously, the plant comprises a programmable command and control unit to coordinate the functioning cycle of the above units, in order to allow the selective management of the compositions of the heterogeneous plastic material according to the technical and/or structural characteristics of the article to be made, and also to control and adjust the speed of advance of the material, the extrusion temperature and pressure, the working times and all the other operative parameters including those relating to the pre-processing.

According to the invention, the method to process heterogeneous plastic materials provides at least a first pre-processing step wherein the waste arriving from the differentiated and/or non-differentiated collection is subjected to at least a step of grinding and screening, in order to obtain a mass of heterogeneous plastic materials of a size not more than 30 mm and with inside it a percentage in weight of non-plastic materials of not more than 10%; the method then provides a second step of mixing and plasticization wherein the mass of heterogeneous plastic materials emerging from the step of pre-processing is extruded, in order to obtain a substantially melted heterogeneous plastic mixture, wherein it is provided, during said mixing and plasticization step, to perform a strong degassing action on the plastic mixture, to eliminate as much as possible, and in any case according to predetermined and/or predeterminable values, the quantity of gas present in the melted plastic emerging from the extruder.

With the plant and method according to the present invention, it is thus possible to achieve a plastic article starting from heterogeneous plastic materials arriving from the recycling of urban and/or industrial waste, having substantially the same characteristics of quality, resistance and stability as an article made with homogeneous plastics or pure plastics of various type.

The present invention provides, according to another solution, to control and adjust the processing parameters according to the specific characteristics of the article to be obtained.

The plant and method according to the present invention also allow to use polyolefin-based heterogeneous plastic materials, that is, with a main component of at least 55% of polyolefin, as basic plastic material for the production of articles having quality characteristics analogous to those of articles made using homogeneous plastic materials such as PP (Polypropylene), HDPE, LDPE, or others.

### BRIEF DESCRIPTION OF THE DRAWINGS

These and other characteristics of the present invention will become apparent from the following description of a preferential form of embodiment, given as a non-restrictive example with reference to the attached drawings wherein:

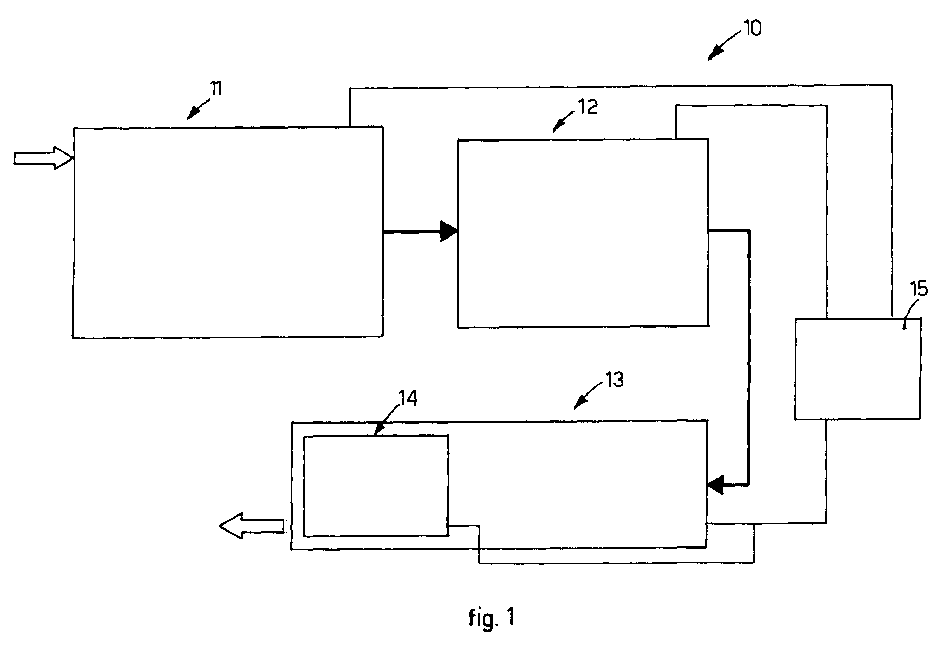

- fig. 1 is a schematic view of a lay-out of a plant for processing heterogeneous plastic materials according to the present invention;

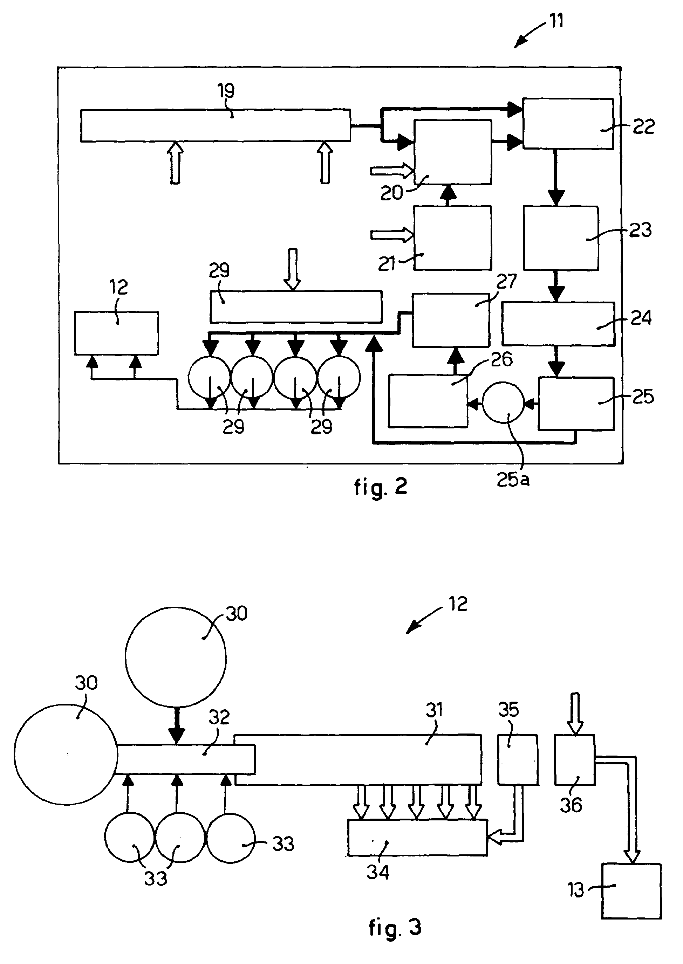

- fig. 2 is a schematic plane view of a first detail of the plant in fig. 1;
- fig. 3 is a schematic plane view of a second detail of the plant in fig. 1;

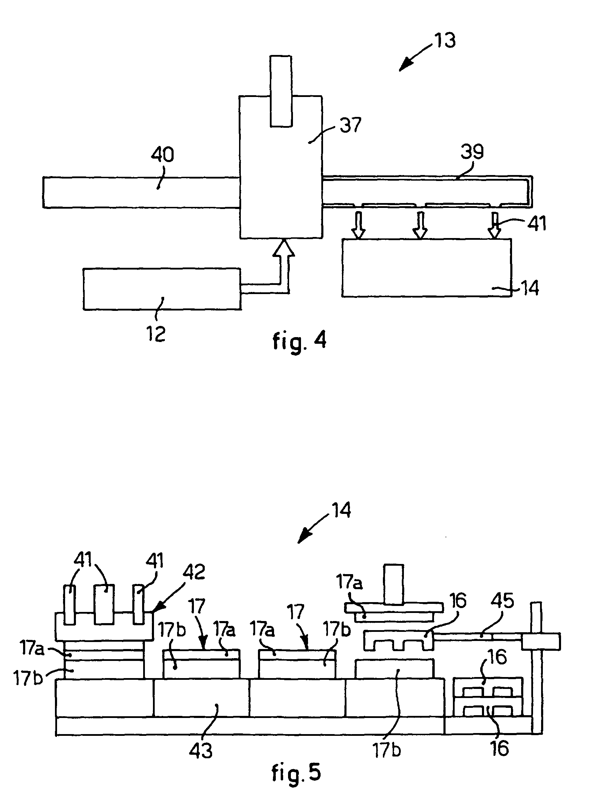

- fig. 4 is a schematic plane view of a third detail of the plant in fig. 1;
- fig. 5 is a schematic plane view of a fourth detail of the plant in fig. 1;
- fig. 6 is a block diagram of a method for processing heterogeneous plastic materials according to the present invention.

### DETAILED DESCRIPTION OF A PREFERENTIAL FORM OF EMBODIMENT

With reference to the attached figures from 1 to 5, a plant 10 for processing heterogeneous plastic materials according to the present invention comprises a pre-processing unit 11 for heterogeneous plastic materials arriving from the waste collection, a mixing and plasticization unit 12 in which a degassing of the plastic mixture obtained also occurs, and in this case an injection unit 13 in order to achieve a desired article 16 in molds 17.

Moreover, the plant 10 according to the invention comprises a command and control unit 15 which coordinates the work cycle of said units 11, 12, 13.

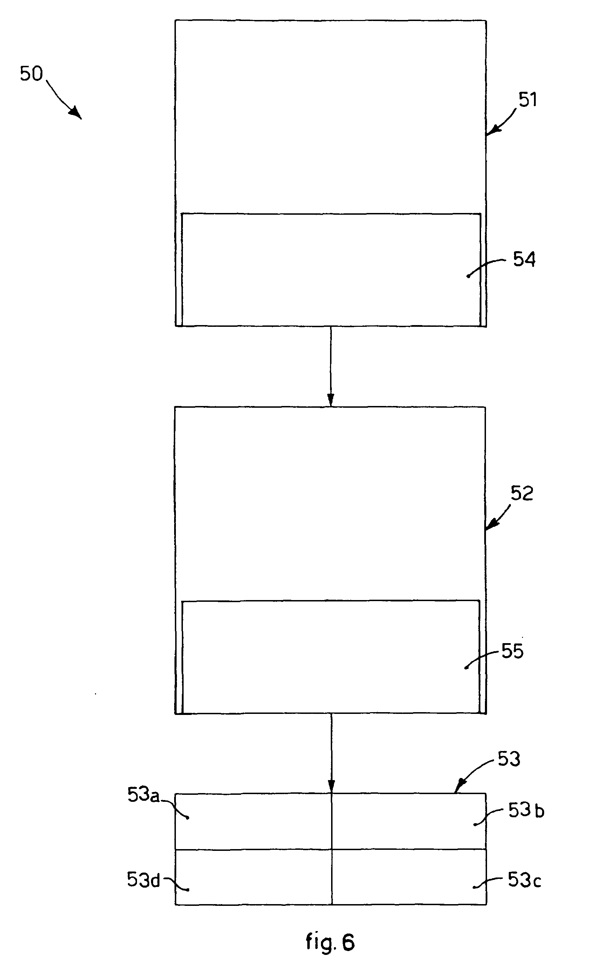

Fig. 6 shows schematically a method 50 for processing heterogeneous plastic materials according to the present invention, which provides in sequence a step of pre-processing 51, a mixing and plasticization step 52 and in this case also an injection step 53.

To be more exact, the command and control unit 15 is of the programmable type and is suitable to condition the functioning of the components of the plant 10 at least according to the technical and/or structural characteristics of the article 16 to be made. To be more exact, the command and control unit 15 is suitable to condition in programmable manner a multiplicity of operations, such as for example: the selection of composition of the plastic material according to the structural characteristics to obtain the article 16; the control and regulation of the speed of feed of the material and the temperature of the plastic materials during the mixing and plasticization steps 52 and injection 53; the control and regulation of the injection and closing pressure of the molds 17; the control and regulation of the cooling times and temperatures of the molds 17; the regulation of the other parameters of the method 50, such as for example the production data, alarms, frequency of maintenance, anomalies, control, regulation of the degassing systems; the control and regulation of the possible injection of inert gases and/or additives and/or other materials; and others.

Moreover, the command and control unit 15 is suitable to control, even remotely, for example via radio waves, via cable or other, the correct functioning of the plant 10 through sensors associated with every individual function of the components installed. To give an example, such sensors control the temperature of the plastic material, the presence of gas, the possible controlled injection of inert gases, the cooling of the molds 17, the quality of the cooling, the injection pressure, the closing pressure of the molds 17 and other parameters.

The pre-processing unit 11 is suitable to perform a plurality of processes on the heterogeneous plastic material arriving from the differentiated and/or non-differentiated waste collection, which allow to obtain a material suitable for the subsequent operations of extrusion and molding.

To be more exact, the pre-processing unit 11 is suitable to perform at least a grinding and screening of the heterogeneous plastic material so that, at outlet from the process, the material has a size of not more than about 30 mm, and the percentage of non-plastic materials present inside it is less than 10% in weight of the total mass.

The pre-processing unit 11 comprises a first conveyor belt 19 which provides to load the waste inside a first shredder 20. The latter then shreds the waste to take it to a size varying from 30 to 100 mm.

The mass of waste thus shredded is removed from the bottom of the shredder 20 and is subjected to a demetalization achieved by means of an electromagnet 22 positioned above the transit path of the mass of waste, the function of which is to attract the pieces of iron possibly present in said mass of waste and remove it therefrom.

In this case, an operation is also performed to select small, non-plastic parts mixed in the heterogeneous mass, such as for example glass, earth, sand or suchlike.

The selection operation can be selectively done by means of a screen 23, for example of the rotary type, vibrating, centrifugal or other.

If necessary, later, another demetalization is performed, to remove the non-magnetic metal parts, for example aluminum, exploiting induced current devices 24.

At the end of this operation, the mass of waste almost exclusively comprises heterogeneous plastic material with a percentage in weight of non-plastic material less than 10%.

Subsequently, the mass of waste is transported into one or more shredder mills 25, possibly disposed parallel, which in turn provide to finely grind the mass of waste, taking it to a size of not more than 30 mm.

At the end of the grinding, the mass of waste is optionally transferred to one or more feeder silos 25a, acting as a storage unit for a gelling device 26, or into one or more storage silos 29, hereafter explained in detail, or directly sent to the mixing and plasticization unit 12.

The pre-processing step 11 comprises in this case a pre-plasticization sub-step 54, wherein the mass of plastic waste treated is inserted directly, or as in this case through the feeder silos 25a, into a pre-extruder or gelling device 26. Since the mass of waste originates directly from the differentiated or non-differentiated collection, and contains various organic components, for example paper or other residual materials, the pre-plasticization sub-step 54 allows to perform a first extraction of the gases contained in said organic components, and the mass of waste exiting from said step consists only of heterogeneous plastic materials.

The heterogeneous plastic materials emerging from the gelling device 26 is in the form of strings of great thickness which are transferred into a second cooled mill 27 which cools them and smashes them into granules and/or agglomerates.

According to a variant of the present invention, the strings emerging from the gelling device 26 can be inserted directly into the mixing and plasticization unit 12.

The plastic granules thus obtained are then stored in the storage silos 29, which in turn feed one or more mixer silos 30 the purpose of which is to form one or more feed storage units for a main extruder 31 of the mixing unit 12.

With the pre-processing unit 11 it is also possible to process rigid plastic waste, such as for example HDPE.

In this case, the mass of waste is first loaded in a jaw-type shredder 21, which allows to grind the rigid and voluminous materials. The materials removed from the jaw-type shredder 21 then converge in the main processing line, that is, through the shredder 20, or the electromagnet 22 and so on.

The rigid plastic material can also not be subjected to the sub-step of pre-plasticization 54, that is, it may not be made to pass through the gelling device 26, and therefore, at outlet from the mills 25, it can be transferred directly to the storage silos 29.

In this way, it is possible to set, by means of the command and control unit 15, a specific defined or personalized working program, in order to dose, calibrate, correct every flow of waste containing heterogeneous plastic material destined for the subsequent operations, according to the characteristics which the final article 16 must have. In fact, the mass of plastic material is stored and divided into the storage silos 29 according to criteria of quality and quantity by the command and control unit 15, according to the type of article 16 to be made, and transported into the mixer silos 30 from which it then passes to the mixing and plasticization unit 12.

According to executive variants, according to the type and origin of the waste to be processed, some of the operations normally provided in the pre-processing step 51 can be by-passed, for example it is possible to skip the shredding and/or screening operations and the plastic material can be introduced directly into the silos 25a or into the gelling device 26 and/or into the extruder 31. The conditions to be maintained are in any case that, at the end of the pre-processing step 51, the mass of plastic material that is introduced into the mixing and plasticization unit 12 has at least a size less than 30 mm and inside it less than 10% in weight of non-plastic material is contained.

At this point the mixing and plasticization step 52 is started, in which the mass of plastic material emerging from the pre-processing unit 11 is introduced into the mixing and plasticization unit 12. The unit 12 comprises a forced feed screw 32 and a main extruder 31 with which degassing devices 34 are associated.

The degassing devices 34 are suitable to remove, from the plastic mixture subjected to extrusion, the gas that forms due to the humidity in the material, the impurities and residues contained in the plastic waste which could evaporate during the degradation of the plastic materials. This gas, as we said, is harmful for a good homogenization of the material, since it could then be accidentally transferred into the molds 17, thus impeding a correct flow of the plastic material, with the possible consequence of producing partly incomplete articles 16 or with possible breaking points.

The Applicants have found that it is advantageous to perform the removal of the gas in the final part of the main extruder 31. However, should the residual presence of gas be found in the plastic material, a variant of the invention provides that downstream of the main extruder 31 another degassing device 35 can be disposed, for example with positive displacement blowers or other device with an analogous function, which allows to guarantee the complete removal of the gas from the extruded plastic mixture, which is then fed to the molds 17.

The gases removed from the melted plastic during the various steps described so far are collected with hoods, of a known type and not shown, and conveyed to a common abatement plant. In this way the maximum respect for the safety conditions of the workers is guaranteed.

In the preferential embodiment shown, in the mixing and plasticization step 52 a sub-step 55 of addition is also provided, in which various types of additives are added in the forced feed screw 32, such as for example colorants, deodorants, reinforcers, expanders or other materials, stored in suitable containing silos 33.

The purpose of the main extruder 31 is to amalgamate and plasticize the inert plastic material inserted together with the possible additives and/or materials loaded on each occasion, forming a desired heterogeneous plastic mixture.

The extruded plastic mixture thus goes to form a completely degassed melted plastic, in which it is possible to insert in controlled manner, by means of suitable introduction nozzles 36, inert gases having expanding functions, which allow the article 16 to be made to have greater mechanical resistance and lower weight.

The melted plastic emerging from the above mixing and plasticization unit 12 passes through a transport member, not shown, which conveys it to a storage head 37 of the injection unit 13, to perform the injection step 53.

An injection thruster 40 is associated with the storage head 37, and provides to inject the melted plastic under pressure through an adjacent injection chamber 39, consisting of a collector which then divides into a plurality of branches which go to feed injectors 41, of a relatively wide section, in order to fill the molds 17 better.

The large number of injectors 41 and their greater section also allow to facilitate the discharge of inert and/or metal parts, and to reduce the injection times, which increases the productivity of the plant 10.

The path of the melted plastic, from the storage head 37 to the molds 17, is equipped with a system of heat regulation which also allows to manage the different zones independently. According to the invention, the temperature in this segment is maintained at from around 150°C to about 260°C. The injection pressure exerted by the injection thruster 40 is also controlled and regulated by the command and control unit 15, for example from about 120 bar to more than 350 bar.

The injectors are individually commanded in opening and closing and allow to dose the melt in every zone of the mold 17. The injectors 41 also allow to exert a great compaction on the molded material, improving the mechanical characteristics of the article 16.

Each of the molds 17 is advantageously made by means of specific metal alloys, possibly surface treated in order to increase the duration thereof, particularly suitable for allowing a rapid flow and cooling of the plastic material inside it, and is formed by an upper part 17a and a lower part 17b. The injectors can be associated with the upper part 17a of each mold, while inside the lower part 17b a plurality of cooling channels are made, not shown here, inside which a thermo vector fluid flows with the function of cooling the plastic material injected inside the mold 17. In this case too, the cooling system can be managed by means of the command and control unit 15, so as to regulate the intensity thereof according to the structural and aesthetic characteristics of the article 16 to be made.

The plant 10 also comprises a pressure unit 14, the function of which is to maintain the upper part 17a pressed against the lower part 17b of each mold 17, contrasting the injection pressure exerted by the injectors 41. The maximum thrust force of the pressure unit 14 is some hundreds of tons.

The pressure unit 14 consists of a fixed structure 42 on which the injectors 41 are fixed, and where the cylinders are housed that exert the thrust on the upper part 17a of each mold 17 during injection, and a mobile structure 43, in this case rotary in one or more positions, in this case four, on which the lower parts 17b of the molds 17 are rested.

The injection step 53 is divided, in this case, into four sub-steps, respectively start-of-cycle 53a, injection 53b, cooling 53c and discharge 53d.

The start-of-cycle sub-step 53a provides that the mobile structure 43 supports a first mold 17 upstream of the fixed structure. In this sub-step 53a the first mold 17 is open and waiting for the melted plastic to be injected into it.

In the injection sub-step 53b the mobile structure 43 is rotated, in this case by about 90°, with respect to the first sub-step 53a, and the first mold 17 finds itself in a second position, where it is in correspondence with the fixed structure 42 and is kept closed with a determinate pressure, and the injection of the melted plastic is effected inside it. In this sub-step 53b the thermo vector fluid begins to flow inside the cooling channels of the lower part 17b, thus advantageously also beginning the cooling of the material injected.

In the cooling sub-step 53c, the mobile structure 43 rotates, in this case by another 90°, taking the first mold 17 to a third position where the thermo vector fluid continues to flow in the cooling channels and the plastic material injected continues in its cooling. Simultaneously, a second mold 17 is taken under the fixed structure 42 in order to start a new injection. The cooling times and the rotation of the mobile structure 43 are managed automatically by the command and control unit 15.

In the discharge sub-step 53d the mobile structure 43 is rotated further, in this case by another 90°, so as to determine the positioning of the first mold 17 in a fourth position where the two parts 17a and 17b are separated and, by means of an extractor device 45, the article 16 thus made is removed from the first mold 17.

Once the article 16 has been removed the two parts 17a and 17b are re-closed and another rotation is made of the mobile structure 43, so as to return the first mold 17 to the first initial position to allow the start of a new cycle.

According to a variant, the number of positions provided for the mobile structure 43 is determined according to the characteristics of the article 16 to be made, and to its operating parameters, that is, material, temperatures, cooling time, and others, while the operating cycle described above remains the same.

According to another variant, the first sub-step 53a, the second sub-step 53b, the third sub-step 53c and the fourth sub-step 53d are performed at least partly simultaneously.

In this way, it is possible to increase the productivity of the plant 10 while still respecting the cooling times necessary for the solidification of the plastic material in the mold 17.

Advantageously, both the injection thruster 40 and the pressure unit 14 are fed by an oil-dynamic plant, not shown, and consisting in a substantially known manner of a pump, a tank and other accessories such as filters, level controls, command valves, cylinders, connections and pipes.

The feed to the cooling channels occurs by means of a plant, not shown, substantially consisting of a storage tank and a refrigerator which allows to work with very low temperatures. The plant 10 advantageously has a closed cycle, and also comprises a distributor for the thermo vector fluid which feeds the molds 17 through the mobile structure 43.

It is clear, however, that modifications and/or additions of parts or steps may be made to the plant 10 and method 50 as described heretofore, without departing from the field and scope of the present invention. It is also clear that, although the present invention has been described with reference to specific examples, a person of skill in the art shall certainly be able to achieve many other equivalent forms of plant and method for processing heterogeneous plastic materials arriving from waste recycling, having the characteristics as set forth in the claims and hence all coming within the field of protection defined thereby.

## Claims

1. Plant for processing heterogeneous plastic materials arriving from waste recycling, in order to obtain a plastic article (16), comprising at least a pre-processing unit (11) able to receive said waste at inlet and to subject it to at least a grinding and screening process, in order to provide at outlet a mass of heterogeneous plastic materials in a size of not more than about 30 mm and with inside it a percentage in weight of non-plastic materials not more than about 10%, and a mixing and plasticization unit (12) comprising at least an extrusion unit (31, 32) into which said mass of heterogeneous plastic materials arriving from said pre-processing unit (11) is fed in order to obtain a heterogeneous plastic mixture, and degassing means (34) associated with said extrusion unit (31, 32), in order to perform a strong degassing of said plastic mixture, at least during the extrusion, **characterized in that** said preprocessing unit (11) comprises a plurality of containers (29, 30) for the differentiated storage of said heterogeneous plastic material, each of said containers (29, 30) being filled with different material in relation to different structural characteristics of said plastic article (16) to be made.

2. Plant as in claim 1, **characterized in that** said pre-processing unit (11) and said mixing and plasticization unit (12) are disposed in line with each other.

3. Plant as in claim 1, **characterized in that** said pre-processing unit (11) and said mixing and plasticization unit (12) are disposed remote from each other.

4. Plant as in any claim hereinbefore, **characterized in that** said pre-processing unit (11) comprises shredding means (20, 21, 25, 27) and selection means (22, 23, 24) to separate the heterogeneous plastic material from the rest of said waste.

5. Plant as in any claim hereinbefore, **characterized in that** said pre-processing unit (11) comprises gelling means (26) to effect a pre-plasticization and at least partial degassing of said heterogeneous plastic material.

6. Plant as in claim 5, **characterized in that** upstream of said gelling means (26) at least a feed member (25a) is provided, able to act as a store unit for said heterogeneous plastic material.

7. Plant as in claim 4, **characterized in that** said shredding means comprises a first shredder (20) disposed upstream of said selection means (22, 23, 24) and able to shred said waste to a size variable from about 30 to about 100 mm, and at least a second shredder (25) disposed downstream of said selection means (22, 23, 24) and able to shred said waste to a size less than 30 mm.

8. Plant as in claim 7, **characterized in that** said shredder means comprises at least a third shredder (27) disposed downstream of said gelling means (26) and able to shred said heterogeneous plastic material into granules.

9. Plant as in any claim from 4 to 8, **characterized in that** said selection means comprises at least a first demetalizer device (22) provided with an electromagnet able to remove the ferromagnetic parts from said waste, and a screen (23) able to separate the small and non-plastic parts, such as earth, sand, paper, glass and others, from said waste.

10. Plant as in claim 9, **characterized in that** said selection means also comprises a second demetalizer device (24) with induced currents, able to separate the non-ferromagnetic metal parts from said waste.

11. Plant as in claim 1, **characterized in that** said mixing and plasticization unit (12) also comprises introduction means (33, 36) able to inject in controlled manner one or more gases and/or one or more additives and/or other material selected in relation to the technical and/or structural characteristics of the plastic article (16) to be made.

12. Plant as in claim 11**, characterized in that** said introduction means (33, 36) is associated with said extrusion unit (31, 32) to inject said gases or other material into the plastic mixture when said plastic mixture is in said extrusion unit (31, 32).

13. Plant as in claim 11, **characterized in that** said introduction means (33, 36) is disposed at outlet from said extrusion unit (31, 32) in order to introduce said gases or other material into the plastic mixture emerging from said extrusion unit (31, 32).

14. Plant as in claim 5, **characterized in that** said extrusion unit (31, 32) is fed directly from said gelling means (26).

15. Plant as in any claim hereinbefore, **characterized in that** said extrusion unit comprises a main extruder (31) from which said substantially melted plastic mixture emerges, and a screw element (32), able to mix said heterogeneous plastic material arriving from said pre-processing unit (11), and to thrust it towards said main extruder (31).

16. Plant as in claim 1, **characterized in that** said degassing means also comprises at least a degassing device (35) disposed at outlet from said extrusion unit (31, 32).

17. Plant as in any claim hereinbefore, **characterized in that** it also comprises an injection unit (13) provided with injection means (37, 39, 40, 41) able to inject into at least a mold (17) said melted plastic material emerging from said mixing and plasticization unit (12).

18. Plant as in claim 17, **characterized in that** said injection means comprises a storage head (37), a hot injection chamber (39) provided with a plurality of injectors (41) and communicating with said storage head (37), and an injection thruster (40) able to be inserted axially into said storage head (37) in order to determine the emergence of said melted plastic material through said injection chamber (39) and said injectors (41).

19. Plant as in claims 17 and 18, **characterized in that** said mold (17) comprises at least an upper part (17a) with which said injectors (41) are selectively associated, and a lower part (17b) inside which a plurality of cooling channels are made, inside which flows a thermo vector fluid to allow the cooling of the plastic material injected.

20. Plant as in any claim from 17 to 19,
**characterized in that** said injection unit (13) also comprises pressure and movement means (14) for said mold (17), provided with a fixed structure (42) on which said injectors (41) are fixed and having at least an actuator able to exert a thrust on said upper part (17a) of said mold (17), and with a mobile structure (43) on which said lower part (17b) of said mold (17) is positioned, and able to move said mold (17) into a plurality of operating positions.

21. Plant as in any claim hereinbefore, **characterized in that** it comprises at least a command and control unit (15) able to manage all the components of said plant (10) according to pre-determined and/or selectively settable parameters in relation to the mechanical and/or aesthetic and/or functional characteristics of the plastic article (16) to be made.

22. Method for processing heterogeneous plastic materials arriving from waste recycling, in order to obtain a plastic article (16), comprising at least a pre-processing step (51) wherein said waste is subjected to at least a grinding and screening process, in order to obtain therefrom a mass of heterogeneous plastic materials of a size not more than about 30 mm and with inside it a percentage in weight of non-plastic materials not more than about 10%, and a second step of mixing and plasticization (52) wherein said mass of heterogeneous plastic materials emerging from said first pre-processing unit step (51) is extruded, in order to obtain a substantially melted heterogeneous plastic mixture, and wherein a strong degassing of said plastic mixture is performed, **characterized** it comprises a further step of providing said pre-processing unit (11) of a plurality of containers (29, 30) for the differentiated storage of said heterogeneous plastic material, each of said containers (29, 30) being filled with different material in relation to different structural characteristics of said plastic article (16) to be made.

23. Method as in claim **22, characterized in that** said first pre-processing step (51) comprises at least a sub-step of pre-plasticization (54) wherein said heterogeneous plastic materials are pre-plasticized, degassed and stored in differentiated manner according to the technical and/or structural characteristics of said plastic article (16) to be made.

24. Method as in claim 23, **characterized in that** said strong degassing action is effected at least before the end of the extrusion of said heterogeneous plastic mixture.

25. Method as in claim 22**, characterized in that** said second mixing and plasticization step (52) also comprises at least a sub-step of addition (55) wherein, into said melted plastic mixture, at least an inert gas and/or at least an additive and/or other material is injected, according to the technical and/or structural characteristics of said plastic article (16) to be made.

26. Method as in claim 25, **characterized in that** said second mixing and plasticization step (52) and said addition sub-step are performed in succession to each other.

27. Method as in claim 25, **characterized in that** said second mixing and plasticization step (52) and said addition sub-step (54) are performed at least partly simultaneously.

28. Method as in any claim from 22 to 27, **characterized in that** it also comprises an injection step (53) wherein said melted plastic mixture is injected into at least a mold (17) in order to make said plastic article (16).

29. Method as in claim 28, **characterized in that** said injection step (53) comprises at least a first sub-step (53a) wherein said mold (17) is in a first start-of-cycle position; a second sub-step (53b) wherein said injection is effected into said mold (17), wherein said mold (17) is maintained closed under pressure and wherein said plastic material begins its cooling; a third sub-step (53c) wherein said injected plastic material continues its cooling; and a fourth sub-step (53d) wherein said plastic article (16) thus made is removed from said mold (17).

30. Method as in claim 29, **characterized in that** said first sub-step (53a), said second sub-step (53b), said third sub-step (53c) and said fourth sub-step (53d) are able to be performed at least partly simultaneously.

31. Method as in any claim from 22 to 30, **characterized in that** the management and operative coordination of said steps (51, 52, 53) and of said sub-steps (53a, 53b, 53c, 53d, 54, 55) occurs in a substantially automated manner by means of a command and control unit (15) according to pre-determined and/or selectively settable parameters in relation to the technical and/or structural characteristics of the plastic article (16) to be made.

## Patentansprüche

1. Anlage zum Verarbeiten heterogener Kunststoffmaterialien, die aus der Abfallwiederverwertung stammen, um ein Kunststofferzeugnis (16) herzustellen, wobei sie wenigstens eine Vorverarbeitungseinheit (11), die den Abfall an einem Einlass aufnehmen kann und ihn wenigstens einem Mahl-und-Sieb-Prozess unterziehen kann, um an einem Auslass eine Masse heterogener Kunststoffmaterialien in einer Größe von nicht mehr als ungefähr 30 mm bereitzustellen, in der ein Gewichtsanteil von Nicht-Kunststoffmaterialen nicht mehr als ungefähr 10 % beträgt, sowie eine Misch-und-Plastifizierungs-Einheit (12) umfasst, die wenigstens eine Extrusionseinheit (31, 32), in die die Masse heterogener Kunststoffmaterialien, die von der Vorverarbeitungseinheit (11) eintrifft, eingeleitet wird, um ein heterogenes Kunststoffgemisch zu gewinnen, sowie eine Entgasungseinrichtung (34) umfasst, die mit der Extrusionseinheit (31, 32) verbunden ist, um ein starkes Entgasen des Kunststoffgemischs wenigstens während der Extrusion durchzuführen, **dadurch gekennzeichnet, dass** die Vorverarbeitungseinheit (11) eine Vielzahl von Behältern (29, 30) für die getrennte Aufbewahrung des heterogenen Kunststoffmaterials umfasst, wobei jeder der Behälter (29, 30) mit unterschiedlichem Material je nach unterschiedlichen strukturellen Eigenschaften des herzustellenden Kunststofferzeugnisses (16) gefüllt ist.

2. Anlage nach Anspruch 1, **dadurch gekennzeichnet, dass** die Vorverarbeitungseinheit (11) und die Misch-und-Plastifizierungs-Einheit (12) aufeinander ausgerichtet angeordnet sind.

3. Anlage nach Anspruch 1, **dadurch gekennzeichnet, dass** die Vorverarbeitungseinheit (11) und die Misch-und-Plastifizierungs-Einheit (12) entfernt voneinander angeordnet sind.

4. Anlage nach einem der vorangehenden Ansprüche, **dadurch gekennzeichnet, dass** die Vorverarbeitungseinheit (11) eine Zerkleinerungseinrichtung (20, 21, 25, 27) und eine Selektionseinrichtung (22, 23, 24) zum Trennen des heterogenen Kunststoffmaterials von dem Rest des Abfalls umfasst.

5. Anlage nach einem der vorangehenden Ansprüche, **dadurch gekennzeichnet, dass** die Vorverarbeitungseinheit (11) eine Galbildungseinrichtung (26) umfasst, die Vorplastifizierung und wenigstens teilweise Entgasung des heterogenen Kunststoffmaterials bewirkt.

6. Anlage nach Anspruch 5, **dadurch gekennzeichnet, dass** vor der Gelbildungseinrichtung (26) wenigstens ein Zuführelement (25a) vorhanden ist, das als eine Speichereinheit für das heterogene Kunststoffmaterial wirken kann.

7. Anlage nach Anspruch 4, **dadurch gekennzeichnet, dass** die Zerkleinerungseinrichtung einen ersten Zerkleinerer (20), der vor der Auswähleinrichtung (22, 23, 24) angeordnet ist und den Abfall auf eine Größe zerkleinern kann, die von ungefähr 30 bis ungefähr 100 mm veränderlich ist, sowie wenigstens einen zweiten Zerkleinerer (25) umfasst, der nach der Auswähleinrichtung (22, 23, 24) angeordnet ist und den Abfall auf eine Größe von weniger als 30 mm zerkleinern kann.

8. Anlage nach Anspruch 7, **dadurch gekennzeichnet, dass** die Zerkleinerungseinrichtung wenigstens einen dritten Zerkleinerer (27) umfasst, der nach der Gelbildungseinrichtung (26) angeordnet ist und das heterogene Kunststoffmaterial zu Körnern zerkleinern kann.

9. Anlage nach einem der Ansprüche 4 bis 8, **dadurch gekennzeichnet, dass** die Selektionseinrichtung wenigstens eine erste Demetallisierungsvorrichtung (demetalizer device) (22), die mit einem Elektromagneten versehen ist, der die ferromagnetischen Teile aus dem Abfall entfernen kann, und ein Sieb (23) umfasst, das die kleinen und Nicht-Kunststoff-Teile, wie beispielsweise Erde, Sand, Papier, Glas und andere, von dem Abfall trennen kann.

10. Anlage nach Anspruch 9, **dadurch gekennzeichnet, dass** die Selektionseinrichtung des Weiteren eine zweite Demetallisierungsvorrichtung (24) mit induzierten Strömen umfasst, die die nicht-ferromagnetischen Metallteile von dem Abfall trennen kann.

11. Anlage nach Anspruch 1, **dadurch gekennzeichnet, dass** die Misch-und-Plastifizierungs-Einheit (12) des Weiteren eine Einleiteinrichtung (33, 36) umfasst, die gesteuert ein oder mehrere Gas/Gase und/oder einen oder mehrere Zusatz/Zusätze und/oder anderes Material, das bezüglich der technischen und/oder strukturellen Eigenschaften des herzustellenden Kunststofferzeugnisses (16) ausgewählt wird, einspeisen kann.

12. Anlage nach Anspruch 11, **dadurch gekennzeichnet, dass** die Einleiteinrichtung (33, 36) mit der Extrusionseinheit (31, 32) verbunden ist, um die Gase oder anderes Material in das Kunststoffgemisch einzuspeisen, wenn sich das Kunststoffgemisch in der Extrusionseinheit (31, 32) befindet.

13. Anlage nach Anspruch 11, **dadurch gekennzeichnet, dass** die Einleiteinrichtung (33, 36) am Auslass aus der Extrusionseinrichtung (31, 32) angeordnet ist, um die Gase oder anderes Material in das Kunststoffgemisch einzuleiten, das aus der Extrusionseinheit (31, 32) austritt.

14. Anlage nach Anspruch 5, **dadurch gekennzeichnet, dass** die Extrusionseinheit (31, 32) direkt von der Gelbildungseinrichtung (26) gespeist wird.

15. Anlage nach einem der vorangehenden Ansprüche, **dadurch gekennzeichnet, dass** die Extrusionseinheit einen Haupt-Extruder (31), aus dem das im Wesentlichen geschmolzene Kunststoffgemisch austritt, sowie ein Schneckenelement (32) umfasst, das das heterogene Kunststoffmaterial, das von der Vorverarbeitungseinheit (11) eintrifft, mischen kann und es zu dem Haupt-Extruder (31) hinschieben kann.

16. Anlage nach Anspruch 1, **dadurch gekennzeichnet, dass** die Entgasungseinrichtung des Weiteren wenigstens eine Entgasungsvorrichtung (35) umfasst, die am Auslass aus der Extrusionseinheit (31, 32) angeordnet ist.

17. Anlage nach einem der vorangehenden Ansprüche, **dadurch gekennzeichnet, dass** sie des Weiteren eine Einspritzeinheit (13) umfasst, die mit einer Einspritzeinrichtung (37, 39, 40, 41) versehen ist, die das geschmolzene Kunststoffmaterial, das aus der Misch-und-Plastifizierungs-Einheit (12) austritt, in wenigstens eine Form (17) einspritzen kann.

18. Anlage nach Anspruch 17, **dadurch gekennzeichnet, dass** die Einspritzeinrichtung einen Speicherkopf (37), eine Heiß-Einspritzkammer (39), die mit einer Vielzahl von Einspritzdüsen (41) versehen ist und mit dem Speicherkopf (37) in Verbindung steht, sowie einen Einspritzdrücker (40) umfasst, der axial in den Speicherkopf (37) eingeführt werden kann, um das Austreten des geschmolzenen Kunststoffmaterials über die Einspritzkammer (35) und die Einspritzdüsen (41) zu bestimmen.

19. Anlage nach Anspruch 17 und 18, **dadurch gekennzeichnet, dass** die Form (17) wenigstens einen oberen Teil (17a), mit dem die Einspritzdüsen (41) selektiv verbunden werden, und einen unteren Teil (17b) umfasst, in dem eine Vielzahl von Kühlkanälen ausgebildet sind, in denen ein Wärmevektorfluid (thermo vector fluid) fließt, um das Kühlen des eingespritzten Kunststoffmaterials zu ermöglichen.

20. Anlage nach einem der Ansprüche 17 bis 19, **dadurch gekennzeichnet, dass** die Einspritzeinheit (13) des Weiteren eine Druck-und-Bewegungs-Einrichtung (14) für die Form (17) umfasst, die mit einer stationären Struktur (42), an der die Einspritzdüsen (41) befestigt sind und die wenigstens ein Stellglied aufweist, das einen Schub auf den oberen Teil (17a) der Form (17) ausüben kann, sowie mit einer beweglichen Struktur (43) versehen ist, an der der untere Teil (17b) der Form (17) angeordnet ist und die die Form (17) in eine Vielzahl von Arbeitspositionen bewegen kann.

21. Anlage nach einem der vorangehenden Ansprüche, **dadurch gekennzeichnet, dass** sie wenigstens eine Befehls-und-Steuerungs-Einheit (15) umfasst, die alle Komponenten der Anlage (10) entsprechend vorgegebenen und/oder selektiv einstellbaren Parametern in Bezug auf die mechanischen und/oder ästhetischen und/oder funktionalen Eigenschaften des herzustellenden Kunststofferzeugnisses (16) verwalten kann.

22. Verfahren zum Verarbeiten heterogener Kunststoffmaterialien, die aus der Abfallwiederverwertung stammen, um ein Kunststofferzeugnis (16) herzustellen, das wenigstens einen Vorverarbeitungsschritt (51), in dem der Abfall wenigstens einem Mahl-und-Sieb-Prozess unterzogen wird, um daraus eine Masse heterogener Kunststoffmaterialien einer Größe von nicht mehr als ungefähr 30 mm zu gewinnen, in der ein Gewichtsanteil von Nicht-Kunststoffmaterialen nicht mehr als ungefähr 10 % beträgt, sowie einen zweiten Schritt des Mischens und Plastifixierens (52) umfasst, in dem die Masse aus heterogenen Kunststoffmaterialien, die aus dem ersten Vorverarbeitungsschritt (51) hervorgeht, extrudiert wird, und in dem ein starkes Entgasen des Kunststoffgemischs durchgeführt wird, **dadurch gekennzeichnet, dass** es einen weiteren Schritt des Bereitstellens einer Vielzahl von Behältern (29) für die getrennte Aufbewahrung des heterogenen Kunststoffmaterials für die Vorverarbeitungseinheit (11) umfasst, wobei jeder der Behälter (29, 30) je nach den unterschiedlichen strukturellen Eigenschaften des herzustellenden Kunststofferzeugnisses (16) mit anderem Material gefüllt ist.

23. Verfahren nach Anspruch 22, **dadurch gekennzeichnet, dass** der erste Vorverarbeitungsschritt (51) wenigstens einen Teilschritt der Vorplastifizierung (54) umfasst, in dem heterogene Kunststoffmaterialien vorplastifiziert, entgast und entsprechend den technischen und/oder strukturellen Eigenschaften des herzustellenden Kunststofferzeugnisses (16) getrennt aufbewahrt werden.

24. Verfahren nach Anspruch 23, **dadurch gekennzeichnet, dass** der starke Entgasungsvorgang wenigstens vor dem Ende des Extrudierens des heterogenen Kunststoffgemischs ausgeführt wird.

25. Verfahren nach Anspruch 22, **dadurch gekennzeichnet, dass** der zweite Misch-und-Plastifizierungs-Schritt (52) auch einen Teilschritt des Hinzufügens (55) umfasst, in dem entsprechend den technischen und/oder strukturellen Eigenschaften des herzustellenden Kunststofferzeugnisses (16) wenigstens ein inertes Gas und/oder wenigstens ein Zusatzstoff und/oder ein anderes Material in das geschmolzene Kunststoffgemisch eingespeist wird.

26. Verfahren nach Anspruch 25, **dadurch gekennzeichnet, dass** der zweite Misch-und-Plastifizierungs-Schritt (52) und der Teilschritt des Hinzufügens nacheinander ausgeführt werden.

27. Verfahren nach Anspruch 25, **dadurch gekennzeichnet, dass** der zweite Misch-und-Plastifizierungs-Schritt (52) und der Schritt (54) des hinzufügens wenigstens teilweise gleichzeitig ausgeführt werden.

28. Verfahren nach einem der Ansprüche 22 bis 27, **dadurch gekennzeichnet, dass** es auch einen Einspritzschritt (53) umfasst, in dem das geschmolzene Kunststoffgemisch in wenigstens eine Form (17) eingespritzt wird, um das Kunststofferzeugnis (16) herzustellen.

29. Verfahren nach Anspruch 28, **dadurch gekennzeichnet, dass** der Einspritzschritt (53) wenigstens einen ersten Teilschritt (53a), in dem sich die Form (17) in einer ersten Zyklus-Anfangs-Position befindet, einen zweiten Teilschritt (53b), in dem das Einspritzen in die Form (17) ausgeführt wird, wobei die Form (17) unter Druck geschlossen gehalten wird und das Kunststoffmaterial beginnt, sich abzukühlen, einen dritten Teilschritt (53c), in dem das eingespritzte Kunststoffmaterial sich weiter abkühlt, und einen vierten Teilschritt (53d) umfasst, in dem das so hergestellte Kunststofferzeugnis (16) aus der Form (17) entfernt wird.

30. Verfahren nach Anspruch 29, **dadurch gekennzeichnet, dass** der erste Teilschritt (53a), der zweite Teilschritt (53b), der dritte Teilschritt (53c) und der vierte Teilschritt (53d) wenigstens teilweise simultan ausgeführt werden können.

31. Verfahren nach einem der Ansprüche 22 bis 30, **dadurch gekennzeichnet, dass** die Verwaltung und operative Koordinierung der Schritte (51, 52, 53) und der Teilschritte (53a, 53b, 53c, 53d, 54, 55) im Wesentlichen automatisch mittels einer Befehls-und-Steuer-Einheit (15) je nach den technischen und/oder strukturellen Eigenschaften des herzustellenden Kunststofferzeugnisses (16) entsprechend vorgegebener und/oder selektiv festlegbarer Parameter stattfindet.

## Revendications

1. Installation de traitement de matériaux plastiques hétérogènes provenant du recyclage de déchets, afin d'obtenir un article en plastique (16), et comprenant au moins une unité de pré-traitement (11) apte à recevoir en entrée lesdits déchets et de les soumettre au moins à un processus de broyage et de tamisage afin de fournir en sortie une masse de matériaux plastiques hétérogènes ne mesurant pas plus de 30 mm et ne contenant pas plus d'environ 10 % en poids de matériaux non plastiques, et une unité de mélange et de plastification (12) comprenant au moins une unité d'extrusion (31, 32) dans laquelle est amenée ladite masse de matériaux plastiques hétérogènes provenant de ladite unité de pré-traitement (11) afin d'obtenir un mélange plastique hétérogène, et un moyen de dégazage (34) associé à ladite unité d'extrusion (31, 32), afin d'effectuer un fort dégazage dudit mélange plastique, au moins pendant l'extrusion, installation **caractérisée en ce que** ladite unité de pré-traitement (11) comprend une pluralité de récipients (29, 30) destinés au stockage distinct dudit matériau plastique hétérogène, chacun desdits récipients (29, 30) étant rempli d'un matériau différent lié aux différences de caractéristiques structurelles dudit article plastique (16) à fabriquer.

2. Installation selon la revendication 1, **caractérisée en ce que** ladite unité de pré-traitement (11) et ladite unité de mélange et de plastification (12) sont alignées l'une sur l'autre.

3. Installation selon la revendication 1, **caractérisée en ce que** ladite unité de pré-traitement (11) et ladite unité de mélange et de plastification (12) sont distantes l'une de l'autre.

4. Installation selon l'une quelconque des revendications ci-dessus, **caractérisée en ce que** ladite unité de pré-traitement (11) comprend des moyens de déchiquetage (20, 21, 25, 27) et des moyens de sélection (22, 23, 24) destinés à séparer le matériau plastique hétérogène du reste desdits déchets.

5. Installation selon l'une quelconque des revendications ci-dessus, **caractérisée en ce que** ladite unité de pré-traitement (11) comprend un moyen de gélification (26) destiné à effectuer une pré-plastification et un dégazage au moins partiel dudit matériau plastique hétérogène.

6. Installation selon la revendication 5, **caractérisée en ce qu'**il est prévu, en amont dudit moyen de gélification (26) au moins un organe d'alimentation (25a) pouvant jouer le rôle d'unité de stockage dudit matériau plastique hétérogène.

7. Installation selon la revendication 4, **caractérisée en ce que** lesdits moyens de déchiquetage comprennent une première déchiqueteuse (20) placée en amont desdits moyens de sélection (22, 23, 24) et apte à déchiqueter lesdits déchets jusqu'à une taille allant d'environ 30 à environ 100 mm, et au moins une deuxième déchiqueteuse (25) placée en aval desdits moyens de sélection (22, 23, 24) et apte à déchiqueter lesdits déchets jusqu'à une taille inférieure à 30 mm.

8. Installation selon la revendication 7, **caractérisée en ce que** lesdits moyens de déchiquetage comprennent au moins une troisième déchiqueteuse (27) placée en aval dudit moyen de gélification (26) et apte à déchiqueter ledit matériau plastique hétérogène en granulés.

9. Installation selon l'une quelconque des revendications 4 à 8, **caractérisée en ce que** lesdits moyens de sélection comprennent au moins un premier dispositif démétalliseur (22) muni d'un électroaimant apte à retirer les parties ferromagnétiques desdits déchets, et un tamis (23) apte à séparer desdits déchets les petites parties et les parties non plastiques telles que la terre, le sable, le papier, le verre et autres.

10. Installation selon la revendication 9, **caractérisée en ce que** lesdits moyens de sélection comprennent aussi un second dispositif démétalliseur (24) à courants induits, apte à séparer les pièces métalliques non ferromagnétiques desdits déchets.

11. Installation selon la revendication 1, **caractérisée en ce que** ladite unité de mélange et de plastification (12) comprend aussi des moyens d'introduction (33, 36) aptes à injecter de façon contrôlée un ou plusieurs gaz et/ou un ou plusieurs additifs et/ou une autre matière choisie en fonction des caractéristiques techniques et/ou structurelles de l'article en plastique (16) à fabriquer.

12. Installation selon la revendication 11, **caractérisée en ce que** lesdits moyens d'introduction (33, 36) sont associés à ladite unité d'extrusion (31, 32) pour injecter lesdits gaz ou autre matière dans le mélange plastique lorsque celui-ci se trouve dans ladite unité d'extrusion (31, 32).

13. Installation selon la revendication 11, **caractérisée en ce que** lesdits moyens d'introduction (33, 36) sont placés en sortie de ladite unité d'extrusion (31, 32) afin d'introduire lesdits gaz ou autre matière dans le mélange plastique qui émerge de ladite unité d'extrusion (31, 32).

14. Installation selon la revendication 5, **caractérisée en ce que** ladite unité d'extrusion (31, 32) est alimentée directement depuis ledit moyen de gélification (26).

15. Installation selon l'une quelconque des revendications ci-dessus, **caractérisée en ce que** ladite unité d'extrusion comprend une extrudeuse principale (31) d'où émerge ledit mélange plastique sensiblement fondu, et un élément à vis (32) apte à mélanger ledit matériau plastique hétérogène provenant de ladite unité de pré-traitement (11), et à le pousser vers ladite extrudeuse principale (31).

16. Installation selon la revendication 1, **caractérisée en ce que** ledit moyen de dégazage comprend aussi au moins un dispositif de dégazage (35) placé en sortie de ladite unité d'extrusion (31, 32).

17. Installation selon l'une quelconque des revendications ci-dessus, **caractérisée en ce qu'**elle comprend aussi une unité d'injection (13) munie de moyens d'injection (37, 39, 40, 41) aptes à injecter dans au moins un moule (17) ledit matériau plastique fondu émergeant de ladite unité de mélange et de plastification (12).

18. Installation selon la revendication 17, **caractérisée en ce que** ledit moyen d'injection comprend une tête accumulatrice (37), une chambre chaude d'injection (39) dotée d'une pluralité d'injecteurs (41) et communiquant avec ladite tête accumulatrice (37), et un poussoir d'injection (40) pouvant être introduit axialement dans ladite tête accumulatrice (37) afin de définir l'émergence dudit matériau plastique fondu, par ladite chambre d'injection (39) et lesdits injecteurs (41).

19. Installation selon les revendications 17 et 18, **caractérisée en ce que** ledit moule (17) comprend au moins une partie supérieure (17a) à laquelle sont sélectivement associés lesdits injecteurs (41), et une partie inférieure (17b) à l'intérieur de laquelle est ménagée une pluralité de canaux de refroidissement, à l'intérieur desquels circule un fluide caloporteur destiné à permettre le refroidissement du matériau plastique injecté.

20. Installation selon l'une quelconque des revendications 17 à 19, **caractérisée en ce que** ladite unité d'injection (13) comprend aussi un moyen de pression et de déplacement (14) dudit moule (17), doté d'une structure fixe (42) sur laquelle sont fixés lesdits injecteurs (41) et possédant au moins un actionneur apte à exercer une poussée sur ladite partie supérieure (17a) dudit moule (17), ainsi que d'une structure mobile (43) sur laquelle est placée ladite partie inférieure (17b) dudit moule (17), et capable de déplacer ledit moule (17) dans une pluralité de positions opératoires.

21. Installation selon l'une quelconque des revendications ci-dessus, **caractérisée en ce qu'**elle comprend au moins une unité de commande et de contrôle (15) capable de gérer tous les composants de ladite installation (10) en fonction de paramètres prédéterminés et/ou sélectivement définissables liés aux caractéristiques mécaniques et/ou esthétiques et/ou fonctionnelles de l'article en plastique (16) à fabriquer.

22. Procédé de traitement de matériaux plastiques hétérogènes provenant du recyclage de déchets, afin d'obtenir un article en plastique (16), et comprenant au moins une étape de pré-traitement (51) dans laquelle lesdits déchets sont au moins soumis à un processus de broyage et de tamisage afin d'en tirer une masse de matériaux plastiques hétérogène ne mesurant pas plus de 30 mm et ne contenant pas plus d'environ 10 % en poids de matériaux non plastiques, et une seconde étape de mélange et de plastification (52) dans laquelle ladite masse de matériaux plastiques hétérogènes émergeant de ladite première étape de pré-traitement (51) est extrudée, afin d'obtenir un mélange plastique hétérogène sensiblement fondu, et dans laquelle est effectué un fort dégazage dudit mélange plastique, procédé **caractérisé en ce qu'**il comprend une étape supplémentaire consistant à doter ladite unité de pré-traitement (11) d'une pluralité de récipients (29, 30) destinés au stockage distinct dudit matériau plastique hétérogène, chacun desdits récipients (29, 30) étant rempli d'un matériau différent lié aux différences de caractéristiques structurelles dudit article en plastique (16) à fabriquer.

23. Procédé selon la revendication 22, **caractérisé en ce que** ladite première étape de pré-traitement (51) comprend au moins une sous-étape de pré-plastification (54) dans laquelle lesdits matériaux plastiques hétérogènes sont pré-plastifiés, dégazés et stockés de manière distincte en fonction des caractéristiques techniques et/ou structurelles dudit article en plastique (16) à fabriquer.

24. Procédé selon la revendication 23, **caractérisé en ce que** ladite action de fort dégazage est effectuée au moins avant la fin de l'extrusion dudit mélange plastique hétérogène.

25. Procédé selon la revendication 22, **caractérisé en ce que** ladite seconde étape de mélange et de plastification (52) comprend également au moins une sous-étape d'ajout (55) dans laquelle est injecté, dans ledit mélange plastique fondu, au moins un gaz inerte et/ou au moins un additif et/ou une autre matière, en fonction des caractéristiques techniques et/ou structurelles dudit article en plastique (16) à fabriquer.

26. Procédé selon la revendication 25, **caractérisé en ce que** ladite seconde étape de mélange et de plastification (52) et ladite sous-étape d'ajout sont effectuées à la suite l'une de l'autre.

27. Procédé selon la revendication 25, **caractérisé en ce que** ladite seconde étape de mélange et de plastification (52) et ladite sous-étape d'ajout sont effectuées au moins en partie simultanément.

28. Procédé selon l'une quelconque des revendications 22 à 27, **caractérisé en ce qu'**il comprend aussi une étape d'injection (53) dans laquelle ledit mélange plastique fondu est injecté dans au moins un moule (17) afin de fabriquer ledit article en plastique (16).

29. Procédé selon la revendication 28, **caractérisé en ce que** ladite étape d'injection (53) comprend au moins une première sous-étape (53a) dans laquelle ledit moule (17) se trouve dans une première position de début de cycle ; une deuxième sous-étape (53b) dans laquelle ladite injection est effectuée dans ledit moule (27), où ledit (17) est maintenu fermé sous pression et où ledit matériau plastique commence à refroidir ; une troisième sous-étape (53c) dans laquelle ledit matériau plastique injecté continue de refroidir; et une quatrième sous-étape (53d) dans laquelle ledit article en plastique (16) ainsi fabriqué est retiré dudit moule (17).

30. Procédé selon la revendication 29, **caractérisé en ce que** ladite première sous-étape (53a), ladite deuxième sous-étape (53b), ladite troisième sous-étape (53c) et ladite quatrième sous-étape (53d) peuvent être effectuées au moins en partie simultanément.

31. Procède selon l'une quelconque des revendications 22 à 30, **caractérisé en ce que** la gestion et la coordination opérationnelle desdites étapes (51, 52, 53) et desdites sous-étapes (53a, 53b, 53c, 53d, 54, 55) se déroule de façon sensiblement automatisé par l'intermédiaire d'une unité de commande et de contrôle (15), en fonction de paramètres prédéterminés et/ou sélectivement définissables liés aux caractéristiques techniques et/ou structurelles de l'article en plastique (16) à fabriquer.
